# EUROPÄISCHE PATENTANMELDUNG

(11) **EP 2 750 310 A1**
(43) Veröffentlichungstag der Anmeldung: **02.07.2014**
(21) Anmeldenummer: 12199675.5
(22) Anmeldetag: 28.12.2012
(51) Int. Cl.: H04J 3/06

(54) **Verfahren zur Synchronisierung lokaler Uhren in einem Kommunikationsnetz eines industriellen Automatisierungssystems und Netzinfrastrukturgerät**

(71) Anmelder: Siemens Aktiengesellschaft, 80333 München (DE)
(72) Erfinder: Chen, Feng, 91058 Erlangen (DE); Götz, Franz-Josef, 91180 Heideck (DE); Kießling, Marcel, 90556 Cadolzburg (DE)

(57) **Zusammenfassung**

In einem Kommunikationsnetz eines industriellen Automatisierungssystems werden lokale Uhren, die an jeweils einem Netzknoten für ein Netzinfrastrukturgerät verwendet werden, entlang eines schleifenfreien Synchronisierungspfades mit einer Baumtopologie ausgehend von einem Netzinfrastrukturgerät an einem Wurzel-Netzknoten als Zeitgeber synchronisiert. Zur Bildung des Synchronisierungspfades tauschen Netzinfrastrukturgeräte untereinander Nachrichten mit Topologieinformationen aus und ermitteln anhand der ausgetauschten Topologieinformationen den Wurzel-Netzknoten als Anfang des Synchronisierungspfades. Das Netzinfrastrukturgerät am Wurzel-Netzknoten wird durch zumindest ein Netzinfrastrukturgerät an einem Nachbar-Netzknoten auf einen Ausfall überwacht. Bei Detektion eines Ausfalls des Netzinfrastrukturgeräts am Wurzel-Netzknoten erzeugt das Netzinfrastrukturgerät am Nachbar-Netzknoten eine Ausfall-Meldung mit einem Identifikator des ausgefallenen Netzinfrastrukturgeräts und übermittelt diese an Netzinfrastrukturgeräte an benachbarten Netzknoten.

## Beschreibung

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Eine mangelnde Synchronisierung zwischen Netzinfrastrukturgeräten innerhalb eines industriellen Kommunikationsnetzes kann zur Beeinträchtigung oder Unterbrechung von Verbindungen zwischen miteinander vernetzten Automatisierungsgeräten führen. Unterbrechungen von Kommunikationsverbindungen zwischen Rechnereinheiten eines industriellen Automatisierungssystems oder Automatisierungsgeräten können wiederum zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy, Parallel Redundancy Protocol oder (Rapid) Spanning Tree Protocol, für hochverfügbare, redundant betreibbare in industriellen Kommunikationsnetze entwickelt worden. Media Redundancy Protocol (MSR) ist im Standard IEC 62439 definiert und ermöglicht eine Kompensation einzelner Verbindungsausfälle in Netzwerken mit einfacher Ringtopologie bei stoßbehafteter redundanter Übertragung von Datenpaketen. Entsprechend Media Redundancy Protocol ist einem Switch mit zwei Ports innerhalb der Ringtopologie ein Redundanz-Manager zugeordnet, der das Netzwerk auf Verbindungsausfälle überwacht und ggf. eine Schaltmaßnahme für einen Ringschluß einleitet. In normalen Betriebszustand prüft der Redundanz-Manager anhand von Test-Datenpaketen, ob innerhalb der Ringtopologie eine Unterbrechung aufgetreten ist. Datenpakete mit Nutzdaten leitet der dem Redundanz-Manager zugeordnet Switch normalerweise jedoch nicht von einem Port an den anderen Port weiter. Somit wird verhindert, daß Datenpakete mit Nutzdaten permanent innerhalb der Ringtopologie zirkulieren. Fällt innerhalb der Ringtopologie ein Switch oder eine Verbindung aus, werden von einem Port ausgesendeten Test-Datenpakete nicht mehr am jeweils anderen Port empfangen. Anhand dessen kann der Redundanz-Manager einen Ausfall erkennen und leitet bei einem Ausfall Datenpakete mit Nutzdaten im Unterschied zum normalen Betriebszustand von einem Port an den anderen Port und umgekehrt weiter. Darüber hinaus veranlaßt der Redundanz-Manager eine Benachrichtigung der übrigen Switches über eine Ausfallbedingte Topologieänderung. Auf diese Weise wird vermieden, daß Datenpakete über die ausgefallene Verbindung übermittelt werden.

High-availability Seamless Redundancy (HSR) und Parallel Redundancy Protocol (PRP) sind im Standard IEC 62439-3 definiert und ermöglichen eine stoßfreie redundante Übertragung von Datenpaketen ohne Erholungszeiten. Entsprechend High-availability Seamless Redundancy und Parallel Redundancy Protocol wird jedes Datenpaket von einer sendenden Kommunikationsgerät dupliziert und auf zwei verschiedenen Wegen zu einem Empfänger geschickt. Durch ein empfängerseitiges Kommunikationsgerät werden Duplikate darstellende redundante Datenpakete aus einem empfangenen Datenstrom ausgefiltert.

Durch das in IEEE 802.1D definierte Spanning Tree Protocol (STP) kann eine schleifenfreie Netztopologie sichergestellt werden, indem zu Schleifen führende Mehrfachverbindungen identifiziert werden und eine Netztopologie durch eine Deaktivierung ausgewählter redundanter Verbindungen in eine Baumtopologie überführt wird. Bei Ausfall einer Verbindung oder eines Netzknotens erfolgt eine Netzrekonfiguration durch eine Ermittlung einer neuen Baumtopologie unter Berücksichtigung ausgefallener bzw. nicht verfügbarer Verbindungen oder Netzknoten. Hierzu tauschen die Netzknoten untereinander als Bridge Protocol Data Units (BPDU) bezeichnete Konfigurationsnachrichten mit Topologieinformationen aus. Das Rapid Spanning Tree Protocol (RSTP) stellt eine Weiterentwicklung des Spanning Tree Protocol (STP) dar und ist in IEEE 802.1D-2004 definiert. Während beim Spanning Tree Protocol (STP) bei Ausfall einer Netzkomponente noch sämtliche Verbindungen unterbrochen werden, bis eine neue Baumtopologie ermittelt ist, fallen beim Rapid Spanning Tree Protocol (RSTP) nur die Verbindungen aus, die von einer ausgefallenen Netzkomponente direkt betroffen sind.

Aus WO 2008/119649 A1 ist ein Verfahren zum Rekonfigurieren eines paketvermittelten Kommunikationsnetzes bekannt, das ein erstes Teilnetz und ein zweites Teilnetz umfaßt. Während im ersten Teilnetz ein erstes Netzprotokoll verwendet wird, wird im zweiten Teilnetz ein vom ersten Netzprotokoll verschiedenes zweites Netzprotokoll verwendet. Beide Teilnetze sind durch wenigstens drei redundante Datenlinks miteinander verbunden, von denen jeweils nur einer zum Nutzdatenaustausch aktiviert ist. Dabei ist ein Master-Datenlink voreingestellt aktiviert, während mindestens zwei Slave-Datenlinks voreingestellt inaktiviert sind. Durch eine mit dem Master-Datenlink verbundene Master-Brücke des zweiten Teilnetzes wird ein Ausfall des Master-Datenlinks oder eines Slave-Datenlinks überwacht. Bei einem solchen Ausfall generiert die Master-Brücke ein erstes Datenpaket und überträgt dies an eine mit einem Slave-Datenlink verbundene Slave-Brücke des zweiten Teilnetzes. Die Slave-Brücke wird gemäß einer vorgebbaren Auswahlregel durch die Master-Brücke ausgewählt. Anschließend wird das erste Datenpaket durch die gewählte Slave-Brücke verarbeitet. Das erste Datenpaket umfaßt logische Informationen, anhand derer eine zumindest teilweise Ausführung des ersten Netzprotokolls auf einem mit dem Slave-Datenlink verbundenen Port der Slave-Brücke und eine Aktivierung des Slave-Datenlinks durch das auf dem Port der Slave-Brücke ausgeführte erste Netzprotokoll erfolgt.

In EP 2 343 857 A1 ist ein Netzknoten für ein Kommunikationsnetz beschrieben, das ein erstes Teilnetz und ein mit diesem verbundenes zweites Teilnetz umfaßt. Während im ersten Teilnetz ein Spannbaum-Protokoll verwendet wird, wird im zweiten Teilnetz ein sich vom Protokoll des ersten Teilnetzes unterscheidendes zweites Protokoll verwendet. Der Netzknoten ist als ein Element für das zweite Teilnetz eingerichtet und zur Kommunikation innerhalb des zweiten Teilnetzes ausgebildet. Darüber hinaus ist der Netzknoten mittels einer Spannbaum-Funktionalität als ein Spannbaum-Hauptknoten zur Überwachung und Steuerung des zweiten Teilnetzes ausgebildet und eingerichtet. Damit kann das zweite Teilnetz vom im ersten Teilnetz verwendeten Spannbaum-Protokoll als ein virtueller Netzknoten behandelt werden, indem der Netzknoten als Spannbaum-Hauptknoten für andere Netzknoten des zweiten Teilnetzes eine Spannbaum-Protokoll-Anwendung vornimmt.

Aus WO 2010/105828 A1 ist ein Verfahren zum Betreiben eines Kommunikationsnetzes mit Redudanz-Eigenschaften bekannt, das eine Ring-Netztopologie aufweist. Innerhalb des Kommunikationsnetzes sind Kommunikationsgeräte mit ihren Datenports über Datenleitungen miteinander verbunden und tauschen auf Basis von Kommunikationsprotokollen Steuerungsdaten sowie Nutzdaten über die Datenleitungen aus. Um ein endloses Kreisen von Nachrichten in Maschen des Kommunikationsnetzes zu vermeiden, wird mittels der Kommunikationsprotokolle eine Übermittlung von Nachrichten über ausgewählte Datenports einzelner Kommunikationsgeräte mit Ausnahme von Nachrichten zur Steuerung bzw. Überwachung von Medienredundanz unterbunden. Innerhalb des Kommunikationsnetzes werden zwei unterschiedliche Kommunikationsprotokolle parallel zueinander in den Kommunikationsgeräten angewendet. Eine parallele Anwendung der unterschiedliche Kommunikationsprotokolle wird beispielsweise dadurch erzielt, eine Kontrolle über zu blockierende Datenports einem einzelnen Kommunikationsprotokoll zugewiesen wird. Alternativ dazu können für die Kommunikationsprotokolle derart Parameter gewählt werden, daß durch ein erstes Kommunikationsprotokoll keine Verbindungen blockiert werden, die entsprechend einem zweiten Kommunikationsprotokoll als aktiv gelten.

In US 2011/0317548 A1 ist ein Verfahren zur Benachrichtigung von Bridges innerhalb eines Kommunikationsnetzes, in dem Nachrichten auf Basis von RSTP übermittelt werden, über einen Ausfall einer Root-Bridge beschrieben, bei die Root-Bridge durch eine Bridge an einem benachbarten Netzknoten überwacht wird. Bei einem detektierten Ausfall der Root-Bridge erzeugt die überwachende Bridge eine Root-Fehler-BPDU, die zusätzlich eine Angabe der ausgefallenen Root-Bridge umfaßt. Diese Root-Fehler-BPDU wird im gesamten Kommunikationsnetz verteilt und veranlaßt die Bridges zu einem Löschen von Informationen über die bisherige, nun ausgefallene Root-Bridge.

Der vorliegenden Erfindung liegt die Aufgabe zugrunde, ein Verfahren zur Synchronisierung lokaler Uhren in einem Kommunikationsnetz eines industriellen Automatisierungssystems anzugeben, das auch bei Fehlern im Kommunikationsnetz eine schnelle Re-Synchronisierung und eine hohe Synchronisierungsgenauigkeit ermöglicht, sowie eine geeignete technische Realisierung des Verfahrens zu schaffen.

Diese Aufgabe wird erfindungsgemäß durch ein Verfahren mit den in Anspruch 1 angegebenen Merkmalen sowie durch ein Netzinfrastrukturgerät mit den in Anspruch 13 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Synchronisierung lokaler Uhren in einem industriellen Kommunikationsnetz werden die lokalen Uhren an jeweils einem Netzknoten für ein Netzinfrastrukturgerät verwendet, beispielsweise als lokaler Taktgenerator. Zu Netzinfrastrukturgeräten zählen beispielsweise Router, Switches, Bridges und Hubs. Die lokalen Uhren werden entlang eines schleifenfreien Synchronisierungspfades mit einer Baumtopologie ausgehend von einem Netzinfrastrukturgerät an einem Wurzel-Netzknoten als Zeitgeber synchronisiert. Zur Bildung des Synchronisierungspfades tauschen Netzinfrastrukturgeräte untereinander Nachrichten mit Topologieinformationen aus und ermitteln anhand der ausgetauschten Topologieinformationen den Wurzel-Netzknoten als Anfang des Synchronisierungspfades. Die Topologieinformationen umfassen beispielsweise Angaben zu bestehenden Verbindungen zwischen Netzknoten. Als Wurzel-Netzknoten wird vorzugsweise derjenige Netzknoten ermittelt, dem das Netzinfrastrukturgerät mit einer höchsten Priorität bzw. einem niedrigsten Identifikatorwert zugeordnet ist. Der Synchronisierungspfad wird erfindungsgemäß anhand einer Ermittlung minimaler Pfadkosten zum Wurzel-Netzknoten aufgebaut.

Entsprechend dem erfindungsgemäßen Verfahren speichern die Netzinfrastrukturgeräte jeweils Angaben über einen Wurzel-Netzknoten sowie über Pfadkosten zum Wurzel-Netzknoten und übermitteln Nachrichten mit Topologieinformationen, welche diese Angaben umfassen, an Netzinfrastrukturgeräte an benachbarten Netzknoten. Vorzugsweise umfassen die in den Netzinfrastrukturgeräten jeweils gespeicherten Angaben über einen Wurzel-Netzknoten einen Identifikator eines Netzinfrastrukturgeräts am Wurzel-Netzknoten. Das Netzinfrastrukturgerät am Wurzel-Netzknoten wird erfindungsgemäß durch zumindest ein Netzinfrastrukturgerät an einem Nachbar-Netzknoten auf einen Ausfall überwacht. Bei Detektion eines Ausfalls des Netzinfrastrukturgeräts am Wurzel-Netzknoten erzeugt das Netzinfrastrukturgerät am Nachbar-Netzknoten eine Ausfall-Meldung mit einem Identifikator des ausgefallenen Netzinfrastrukturgeräts und übermittelt diese an Netzinfrastrukturgeräte an benachbarten Netzknoten. Dabei ist die Ausfall-Meldung von einer Nachricht mit Topologieinformationen umfaßt oder an diese angefügt. Die Netzinfrastrukturgeräte leiten eine empfangene Ausfall-Meldung jeweils an Netzinfrastrukturgeräte an benachbarten Netzknoten weiter. Darüber hinaus löschen die Netzinfrastrukturgeräte einen jeweils gespeicherten Identifikator, der einem Netzinfrastrukturgerät an einem bisherigen Wurzel-Netzknoten zugeordnet ist, falls dieser Identifikator mit dem in der Ausfall-Meldung angegebenen Identifikator des ausgefallenen Netzinfrastrukturgeräts übereinstimmt. Auf diese Weise wird eine verkürzte Rekonfigurationszeit bei einer Ermittlung eines Synchronisierungspfades erzielt. Dies ermöglicht insbesondere bei zeitkritischen Steuerungen verteilter Antriebssysteme in einem industriellen Automatisierungssystem eine schnelle Zeitsynchronisierung zwischen einem Master-Gerät einerseits und lokalen Steuerungsgeräten sowie zugeordneten Kommunikationsgeräten andererseits.

Vorzugsweise vergleichen die Netzinfrastrukturgeräte Angaben über einen Wurzel-Netzknoten und Pfadkosten zum Wurzel-Netzknoten in empfangene Nachrichten mit Topologieinformationen jeweils mit entsprechenden lokal gespeicherten Angaben und übernehmen oder behalten diejenigen Angaben bei, denen geringere Pfadkosten zugeordnet sind. Entsprechend einer bevorzugten Weiterbildung des erfindungsgemäßen Verfahrens sind die Netzinfrastrukturgeräte nach Übermittlung oder Weiterleitung einer Ausfall-Meldung an Netzinfrastrukturgeräte an benachbarten Netzknoten während einer vorgegebenen Zeitdauer jeweils gegen eine Verarbeitung weiterer Ausfall-Meldungen bzw. Nachrichten mit Topologieinformationen gesperrt. Vorteilhafterweise können die Netzinfrastrukturgeräte nach Übermittlung oder Weiterleitung einer Ausfall-Meldung an Netzinfrastrukturgeräte an benachbarten Netzknoten während der vorgegebene Zeitdauer jedoch jeweils für eine Verarbeitung weiterer Ausfall-Meldungen bzw. Nachrichten mit Topologieinformationen aktiviert sein, die direkt an jeweiligen Nachbar-Netzknoten erzeugt sind. Vorzugsweise übermitteln die Netzinfrastrukturgeräte während der vorgegebenen Zeitdauer um Ausfall-Meldungen bereinigte Nachrichten mit Topologieinformationen an Netzinfrastrukturgeräte an benachbarten Netzknoten oder leiten diese weiter. Entsprechend einer besonders bevorzugten Ausgestaltung des erfindungsgemäßen Verfahrens erfolgt eine Sperrung eines Netzinfrastrukturgeräts gegen eine Verarbeitung weiterer Ausfall-Meldungen bzw. Nachrichten mit Topologieinformationen mittels eines dem Netzinfrastrukturgerät zugeordneten Schutz-Timers. Auf diese Weise kann bei einer Rekonfiguration eine Übernahme möglicherweise noch kursierender veralteter Pfadinformationen verhindert werden.

Entsprechend einer weiteren Ausgestaltung des erfindungsgemä-βen Verfahrens leiten die Netzinfrastrukturgeräte eine Ausfall-Meldung jeweils an Netzinfrastrukturgeräte an benachbarten Netzknoten nur dann weiter, wenn der in der Ausfall-Meldung angegebene Identifikator des ausgefallenen Netzinfrastrukturgerätes mit einem jeweils gespeicherten Identifikator eines Netzinfrastrukturgeräts am bisherigen Wurzel-Netzknoten übereinstimmt. Auf diese Weise kann eine Verbreitung von ungültigen Pfad- bzw. Konfigurationsinformationen unterbunden werden. Darüber hinaus kann hierzu vorteilhafterweise vorgesehen sein, daß die Netzinfrastrukturgeräte eine um die Ausfall-Meldung bereinigte Nachricht mit Topologieinformationen jeweils an Netzinfrastrukturgeräte an benachbarten Netzknoten weiterleiten, wenn der in der Ausfall-Meldung angegebene Identifikator des ausgefallenen Netzinfrastrukturgerätes mit einem jeweils gespeicherten Identifikator eines Netzinfrastrukturgeräts am bisherigen Wurzel-Netzknoten übereinstimmt.

Das erfindungsgemäße Netzinfrastrukturgerät zur Durchführung eines vorangehend beschriebenen Verfahrens umfaßt mehrere Anschlüsse für eine Verbindung mit innerhalb eines industriellen Kommunikationsnetzes miteinander verbundenen Netzinfrastruktur- oder Kommunikationsgeräten. Außerdem weist das Netzinfrastrukturgerät ein die Anschlüsse miteinander verbindendes Koppelelement sowie eine lokale Uhr auf. Beispielsweise dient die lokale Uhr als lokaler Taktgenerator für einen synchronisierten Austausch von Datenrahmen mit anderen Netzinfrastrukturgeräten. Darüber hinaus ist das Netzinfrastrukturgerät für einen Austausch von Nachrichten mit Topologieinformationen und für eine Ermittlung eines Wurzel-Netzknotens als Anfang eines Synchronisierungspfades anhand ausgetauschter Topologieinformationen eingerichtet, beispielsweise durch eine Sende-/Empfangseinheit, eine Speichereinheit bzw. eine Verarbeitungseinheit für Nachrichten mit Topologieinformationen. Der Synchronisierungspfad ist durch minimale Pfadkosten zum Wurzel-Netzknoten gekennzeichnet. Des weiteren ist das Netzinfrastrukturgerät für eine Speicherung von Angaben über einen Wurzel-Netzknoten und Pfadkosten zum Wurzel-Netzknoten und für eine Übermittlung von Nachrichten mit Topologieinformationen, welche diese Angaben umfassen, an Netzinfrastrukturgeräte an benachbarten Netzknoten eingerichtet.

Ferner ist das erfindungsgemäße Netzinfrastrukturgerät für eine Ausfall-Überwachung eines Netzinfrastrukturgeräts an einem benachbarten Wurzel-Netzknoten eingerichtet, beispielsweise mittels einer Sende-/Empfangseinheit sowie einer Auswerteeinheit für ein Senden bzw. Anfordern von "keep alive" Meldungen zur Zustandsabfrage und deren Auswertung. Zusätzlich ist das Netzinfrastrukturgerät für eine Erzeugung einer Ausfall-Meldung mit einem Identifikator eines ausgefallenen Netzinfrastrukturgeräts an einem benachbarten Wurzel-Netzknoten und für eine Übermittlung dieser Ausfall-Meldung an Netzinfrastrukturgeräte an benachbarten Netzknoten eingerichtet. Dabei ist die Ausfall-Meldung von einer Nachricht mit Topologieinformationen umfaßt oder an diese angefügt. Au-βerdem ist das Netzinfrastrukturgerät für eine Weiterleitung einer Ausfall-Meldung an Netzinfrastrukturgeräte an benachbarten Netzknoten eingerichtet. Schließlich ist das Netzinfrastrukturgerät für eine Löschung eines gespeicherten Identifikators eines Netzinfrastrukturgeräts an einem bisherigen Wurzel-Netzknotens eingerichtet, falls dieser mit einem in einer Ausfall-Meldung angegebenen Identifikator eines ausgefallenen Netzinfrastrukturgeräts übereinstimmt. Dies ermöglicht eine verkürzte Rekonfigurationszeit bei einer Ermittlung eines Synchronisierungspfades.

Vorzugsweise ist das Netzinfrastrukturgerät nach Übermittlung oder Weiterleitung einer Ausfall-Meldung an Netzinfrastrukturgeräte an benachbarten Netzknoten während einer vorgegebene Zeitdauer jeweils gegen eine Verarbeitung weiterer Ausfall-Meldungen gesperrt. Für eine Sperrung des Netzinfrastrukturgeräts gegen eine Verarbeitung weiterer Ausfall-Meldungen kann beispielsweise ein dem Netzinfrastrukturgerät zugeordneter Schutz-Timer vorgesehen sein. Zusätzlich kann das Netzinfrastrukturgerät eingerichtet sein, nach Übermittlung oder Weiterleitung einer Ausfall-Meldung an Netzinfrastrukturgeräte an benachbarten Netzknoten während der vorgegebenen Zeitdauer jeweils um Ausfall-Meldungen bereinigte Nachrichten mit Topologieinformationen an Netzinfrastrukturgeräte an benachbarten Netzknoten zu übermitteln oder weiterzuleiten. Damit kann eine Verbreitung von ungültigen Pfad- bzw. Konfigurationsinformationen unterbunden werden.

Entsprechend einer bevorzugten Ausgestaltung ist das Netzinfrastrukturgerät eingerichtet, Angaben über einen Wurzel-Netzknoten und Pfadkosten zum Wurzel-Netzknoten in empfangene Nachrichten mit Topologieinformationen jeweils mit entsprechenden lokal gespeicherten Angaben zu vergleichen und diejenigen Angaben zu übernehmen oder beizubehalten, denen geringere Pfadkosten zugeordnet sind. Auf diese Weise wird eine Verbreitung gültiger Pfad- und Konfigurationsinformationen sichergestellt.

Die vorliegende Erfindung wird nachfolgend an einem Ausführungsbeispiel anhand der Zeichnung näher erläutert. Es zeigt
- Figur 1: Kommunikationsnetz eines industriellen Automatisierungssystems mit mehreren Switches und zugeordneten lokalen Uhren,
- Figur 2: ein Signalflußdiagramm zur Darstellung einer Weiterleitung von Ausfall-Meldungen zwischen mehreren Switches ohne Verwendung von Schutz-Timern,
- Figur 3: ein Signalflußdiagramm zur Darstellung einer Weiterleitung von Ausfall-Meldungen zwischen mehreren Switches mit Verwendung von Schutz-Timern.

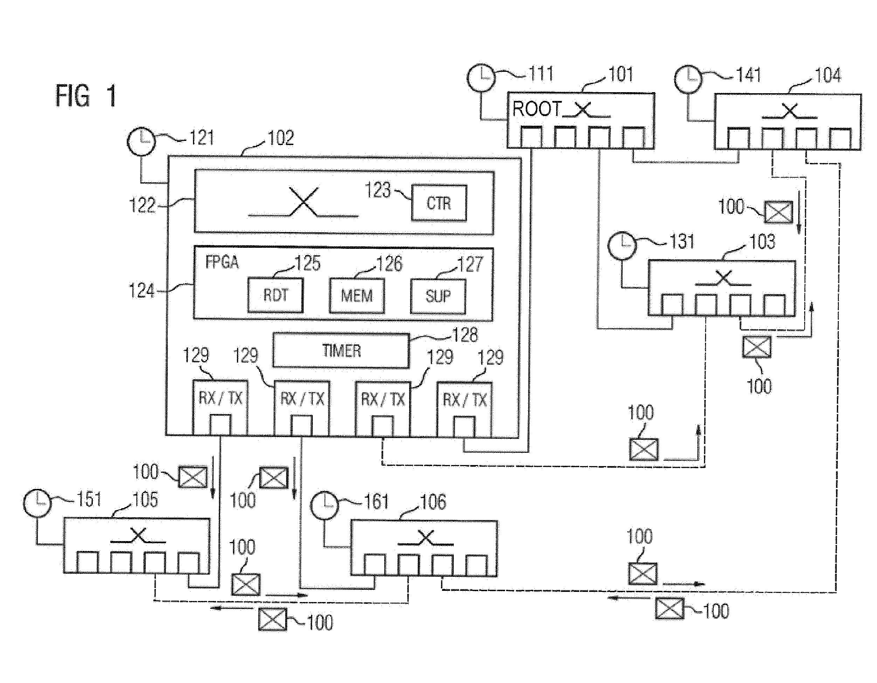

Das in Figur 1 dargestellte Kommunikationsnetz umfaßt mehrere Switches 101-106, denen für einen synchronisierten Austausch von Datenrahmen jeweils eine lokale Uhr 111, 121, 131, 141, 151, 161 zugeordnet ist, die vorzugsweise als lokaler Taktgenerator genutzt wird. Nachfolgende Ausführungen sind nicht auf Switches als Netzinfrastrukturgeräte beschränkt, sondern gelten gleichermaßen beispielsweise auch für Router, Bridges und Hubs.

Die lokalen Uhren 121, 131, 141, 151, 161 werden entlang eines schleifenfreien Synchronisierungspfades mit einer Baumtopologie ausgehend von einem Switch 101 an einem Wurzel-Netzknoten als Zeitgeber synchronisiert. Somit weisen die Uhren 121, 131, 141, 151, 161 als lokale Taktgeneratoren hinsichtlich ihrer Synchronisierung untereinander jeweils eine Slave-Rolle auf, während der Switch 101 am Wurzelnetzknoten als Zeitgeber für die Synchronisierung entsprechend einer Master-Rolle betrieben wird. Grundsätzlich können die Switches 101-106 für die Synchronisierung ihrer lokalen Uhren 111, 121, 131, 141, 151, 161 sowohl entsprechend einer Slave-Rolle als auch entsprechend einer Master-Rolle betrieben werden. Allerdings ist es dabei nicht erforderlich, daß alle Switches 101-106 sowohl entsprechend einer Slave-Rolle als auch entsprechend einer Master-Rolle betrieben werden können. Vielmehr ist es ausreichend, wenn eine Mehrzahl von Switches für die Synchronisierung der lokalen Uhren eine Master-Rolle übernehmen kann, so daß dementsprechend ein oder mehrere Reserve-Master zur Verfügung stehen. In Figur 1 sind für eine Übermittlung von Synchronisierungsinformationen aktive Verbindungen zwischen Switches 101-106 als durchgezogene Linien dargestellt, während zu Schleifen führende deaktivierte Verbindungen durch gestrichelte Linien repräsentiert werden.

Die Switches 101-106 weisen einen grundsätzlich ähnlichen Aufbau und eine vergleichbare Funktionalität auf. Exemplarisch ist ein Switch 102 an einem Nachbar-Netzknoten des Wurzel-Netzknotens detaillierter dargestellt. Der Switch 102 weist mehrere jeweils zumindest einen Anschluß umfassende Sende-/Empfangseinheiten 129 für Verbindungen mit an das industrielle Kommunikationsnetz angeschlossenen Netzinfrastruktur- oder Kommunikationsgeräten entsprechend einem Parallel-, Ring- oder Medienredundanzprotokoll auf. Außerdem umfaßt der Switch 102 ein die Anschlüsse schaltbar miteinander verbindendes Koppelelement 122 mit einer zugeordneten Controller 123. Das Koppelelement 122 ist im vorliegenden Ausführungsbeispiel ein Hochgeschwindigkeitsbus, vorzugsweise ein Backplane Switch mit integriertem Controller. Alternativ hierzu kann das Koppelelement 122 grundsätzlich auch mittels eines Matrix-Schaltnetzes realisiert sein.

Als Mittel zur Nachrichtenübermittlung innerhalb des industriellen Kommunikationsnetzes umfaßt der Switch 102 neben dem Koppelelement und den Sende-/Empfangseinheiten 129 eine Signalverarbeitungseinheit 124. Die Signalverarbeitungseinheit 124 ist vorzugsweise mittels eines Field Programmable Gate Arrays (FPGA) realisiert und umfaßt eine Detektionseinheit 125. Die Detektionseinheit 125 ist für einen Austausch von Nachrichten 100 mit Topologieinformationen und für eine Ermittlung eines Wurzel-Netzknotens als Anfang eines Synchronisierungspfades anhand ausgetauschter Topologieinformationen ausgestaltet und eingerichtet. Dabei ist der Synchronisierungspfad durch minimale Pfadkosten zum Wurzel-Netzknoten gekennzeichnet. Die Topologieinformationen umfassen vorzugsweise Angaben zu bestehenden Verbindungen zwischen Netzknoten.

Zusätzlich umfaßt die Signalverarbeitungseinheit 124 eine Speichereinheit 126 für eine Speicherung von Angaben über einen Wurzel-Netzknoten und über Pfadkosten zum Wurzel-Netzknoten. Die in der Speichereinheit 126 gespeicherten Angaben über einen Wurzel-Netzknoten umfassen vorzugsweise einen Identifikator des Switchs am Wurzel-Netzknoten. Der Controller 123 des Koppelelements 122 ist im vorliegenden Ausführungsbeispiel für eine Steuerung einer Übermittlung von Nachrichten 100 mit Topologieinformationen, welche Angaben über den Wurzel-Netzknoten und die Pfadkosten zum Wurzel-Netzknoten umfassen, an Switches 101, 103, 105, 106 an benachbarten Netzknoten vorgesehen sowie dementsprechend ausgestaltet und eingerichtet.

Die Switches 101-106 vergleichen Angaben über einen Wurzel-Netzknoten und Pfadkosten zum Wurzel-Netzknoten in empfangenen Nachrichten 100 mit Topologieinformationen jeweils mit entsprechenden lokal gespeicherten Angaben und übernehmen bzw. behalten diejenigen Angaben bei, denen geringere Pfadkosten zugeordnet sind. Als Wurzel-Netzknoten für den Synchronisierungspfad wird derjenige Netzknoten ermittelt, dem der Switch mit einer höchsten Priorität bzw. einem niedrigsten Identifikatorwert zugeordnet ist.

Die Signalverarbeitungseinheit 124 des Switchs 102 umfaßt des weiteren eine Überwachungseinheit 127 für eine Ausfall-Überwachung des Switchs 101 am benachbarten Wurzel-Netzknoten. Die Überwachungseinheit 127 ist außerdem für eine Erzeugung einer Ausfall-Meldung mit einem Identifikator eines ausgefallenen Netzinfrastrukturgeräts an einem benachbarten Wurzel-Netzknoten und für eine Übermittlung dieser Ausfall-Meldung an Netzinfrastrukturgeräte an benachbarten Netzknoten vorgesehen. Dabei ist die Ausfall-Meldung von einer Nachricht 100 mit Topologieinformationen umfaßt oder wird an diese angefügt. Der Controller 123 des Koppelelements 122 ist im vorliegenden Ausführungsbeispiel für eine Weiterleitung einer Ausfall-Meldung an Netzinfrastrukturgeräte an benachbarten Netzknoten eingerichtet. Durch die Detektionseinheit 125 bzw. die Speichereinheit 126 erfolgt eine Löschung eines gespeicherten Identifikators, der einem Netzinfrastrukturgerät an einem bisherigen Wurzel-Netzknoten zugeordnet ist, falls dieser mit einem in einer Ausfall-Meldung angegebenen Identifikator eines ausgefallenen Netzinfrastrukturgeräts übereinstimmt. Darüber hinaus umfaßt die Signalverarbeitungseinheit 124 einen Schutz-Timer 128, um eine Weiterleitung von Ausfall-Meldungen bzw. Nachrichten mit Topologieinformationen temporär zu unterdrücken.

Eine Löschung eines gespeicherten Identifikators, der einem Netzinfrastrukturgerät an einem bisherigen Wurzel-Netzknoten zugeordnet ist, ermöglicht bei Ausfällen oder Topologieänderungen eine Sicherstellung konsistenter Synchronisierungsinformationen. Dies ist insbesondere bei Switches wichtig, bei denen Synchronisierungsinformationen an mehr als einem Anschluß gespeichert werden. Weist beispielsweise ein erster Anschluß eine aktive Port-Rolle auf (S-Port) und leitet empfangene Synchronisierungsinformationen an andere Switches weiter, während ein zweiter Anschluß eine passive Port-Rolle aufweist (P-Port) und empfangene Synchronisierungsinformationen lediglich lokal speichert, kann eine unvollständige Löschung veralteter Synchronisierungsinformationen zu einer Verbreitung veralteter Synchronisierungsinformationen anstelle aktueller Synchronisierungsinformationen führen. Dies kann beispielsweise eintreten, wenn an einem S-Port eine Information über einen Ausfall eines bisherigen Wurzel-Netzknotens empfangen wird und am S-Port die Information über den bisherigen Netzknoten gelöscht wird, nicht aber am P-Port. Aufgrund einer am P-Port noch vorhandenen Information über einen Wurzel-Netzknoten, könnte in Ermangelung anderweitiger Informationen eine am P-Port gespeicherte veraltete Information durch den S-Port verbreitet werden.

Im vorliegenden Ausführungsbeispiel sind sämtliche Switches 101-106 dazu ausgestaltet und eingerichtet, einen Switch an einer Wurzel-Netzknoten auf einen Ausfall zu überwachen sowie Ausfall-Meldungen zu erzeugen, weiterzuleiten und entsprechend vorangehender Beschreibung zu verarbeiten. Zudem kann grundsätzlich jeder Switch 101-106 eine Rolle als Switch an einem Wurzel-Netzknoten wahrnehmen, so daß seine lokale Uhr zu einem Master für eine Synchronisierung der lokalen Uhren an den übrigen Switches wird.

Vorteilhafterweise leiten die Switches 101-106 eine Ausfall-Meldung jeweils an Switches 101-106 an benachbarten Netzknoten nur dann weiter, wenn der in der Ausfall-Meldung angegebene Identifikator des ausgefallenen Switchs mit einem jeweils gespeicherten Identifikator eines Switchs am bisherigen Wurzel-Netzknoten übereinstimmt. Darüber hinaus können die Switches 101-106 eine Nachricht mit Topologieinformationen um die Ausfall-Meldung bereinigt jeweils an Switches 101-106 an benachbarten Netzknoten weiterleiten, wenn der in der Ausfall-Meldung angegebene Identifikator des ausgefallenen Switchs mit einem jeweils gespeicherten Identifikator eines Switchs am bisherigen Wurzel-Netzknoten übereinstimmt.

Zusätzlich kann die Signalverarbeitungseinheit 124 des Switchs 102 eine Multiplexereinheit und eine Redundanzbehandlungseinheit für eine Nachrichtenübermittlung entsprechend einem Parallel- oder Ringredundanzprotokoll umfassen. Die Multiplexereinheit dient dabei zur parallelen Weiterleitung redundant zu sendender Nachrichten an zwei Sendeeinheiten, während die Redundanzbehandlungseinheit zur Verarbeitung von zwei Empfangseinheiten redundant empfangener Nachrichten vorgesehen ist. Die Redundanzbehandlungseinheit umfaßt außerdem eine Filtereinheit, die für eine Detektion empfangener redundanter Datenpakete eingerichtet ist.

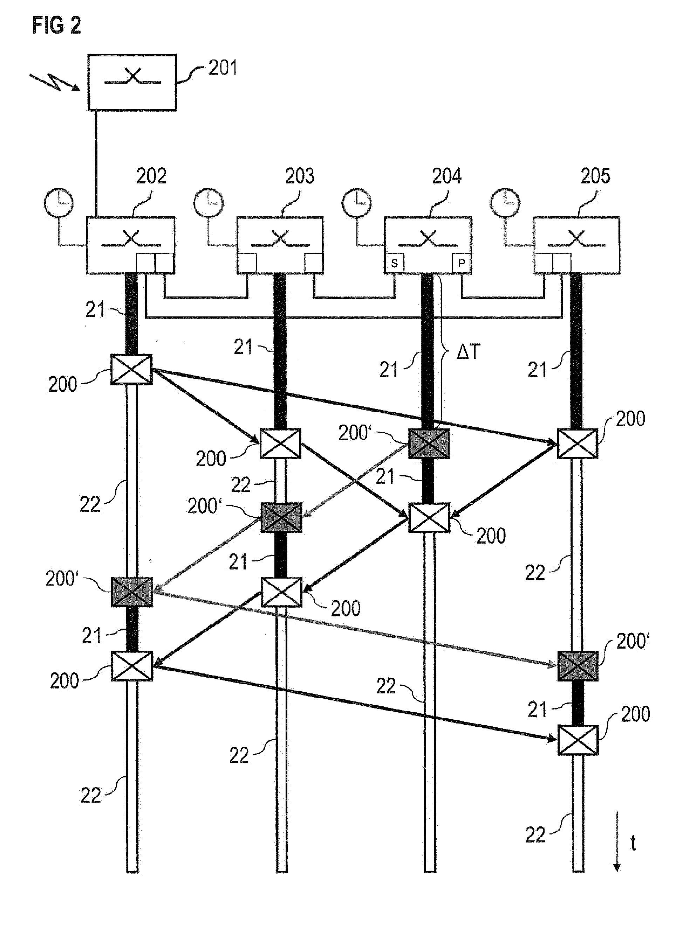

In Figur 2 ist ein Signalfluß bei einer Weiterleitung von Ausfall-Meldungen zwischen mehreren Switches ohne Verwendung von Schutz-Timern dargestellt. Entsprechend Figur 2 ist ein erster Switch 201 an einem Wurzel-Netzknoten mit einem zweiten Switch 202 verbunden, der innerhalb einer Ringtopologie mit einem dritten 203, vierten 204 und fünften Switch 205 verbunden ist. Dabei ist der zweite Switch 202 direkt mit dem dritten 203 und dem fünften Switch 205 verbunden, während der vierte Switch 204 direkt mit dem dritten 203 und fünften Switch 205 verbunden ist. Der vierte Switch 204 weist einen ersten Anschluß mit einer aktiven Port-Rolle (S-Port), der empfangene Synchronisierungsinformationen auch an andere Switches weiterleitet, und einen zweiten Anschluß mit einer passiven Port-Rolle (P-Port) auf, der empfangene Synchronisierungsinformationen lediglich lokal speichert. Darüber hinaus ist insbesondere der vierte Switch 204 derart konfiguriert, daß er in regelmäßigen Zeitintervallen ΔT lokal verfügbare Synchronisierungsinformationen zur Timer-basierten Überwachung eines Synchronisierungspfades an Switches benachbarter Netzknoten sendet. Wie nachfolgend erläutert, kann es bei einem Ausfall des ersten Switchs 201 am Wurzel-Netzknoten kann es unter diesen Voraussetzungen ohne Verwendung von Schutz-Timern zu einer Verbreitung veralteter Synchronisierungsinformationen kommen. Lokal in den Switches 202-205 gespeicherte veraltete bzw. noch nicht aktualisierte Synchronisierungsinformationen 21 sind in Figur 2 jeweils durch sich vertikal erstreckende Balken mit schwarzer Füllung dargestellt, während aktualisierte Synchronisierungsinformationen 22 durch Balken mit schwarzer Füllung visualisiert sind.

Fällt der erste Switch 201 am Wurzel-Netzknoten aus, wird zunächst eine Ausfall-Meldung 200 zunächst vom zweiten Switch 202 an den benachbarten dritten Switch 203 und an den benachbarten fünften Switch 205 gesendet. Der dritte Switch 203 und der fünfte Switch 205 leiten die empfangene Ausfall-Meldung 200 jeweils an einen benachbarten vierten Switch 204 weiter. Sendet der vierte Switch 204 nach Ablauf des Zeitintervalls ΔT über seinen S-Port lokal verfügbare Synchronisierungsinformationen 200' noch vor Empfang der Ausfall-Meldung 200 an den benachbarten dritten Switch 203, werden sowohl die Ausfall-Meldung 200 als auch veraltete Synchronisierungsinformationen 200' konkurrierend verbreitet. Der vierte Switch 204 leitet die vom dritten Switch 203 und vom fünften Switch 205 empfangene Ausfall-Meldung 200 über seinen ersten Anschluß (S-Port) kurz nach Senden der veralteten Synchronisierungsinformationen 200' an den dritten Switch 203 weiter. Ein Senden oder Weiterleiten von Ausfall-Meldungen 200 oder lokal verfügbare Synchronisierungsinformationen 200' über den zweiten Anschluß (P-Port) des vierten Switchs 204 ist entsprechend seiner Port-Rolle nicht vorgesehen.

Sowohl die Ausfall-Meldung 200 als auch die veralteten Synchronisierungsinformationen 200' werden mit einer Zeitdifferenz nachfolgend an den zweiten Switch 202 und anschließend an den fünften Switch 205 weitergeleitet. Dies führt dazu, daß nach Empfang der veralteten Synchronisierungsinformationen 200' und vor Empfang der Ausfall-Meldung 200 lokal im dritten 203, zweiten 202 und fünften Switch 205 zwischenzeitlich veraltete Synchronisierungsinformationen 21 gespeichert sind. Erst nach Empfang der Ausfall-Meldung 200 sind lokal im dritten 203, zweiten 202 und fünften Switch 205 aktualisierte Synchronisierungsinformationen 22 gespeichert.

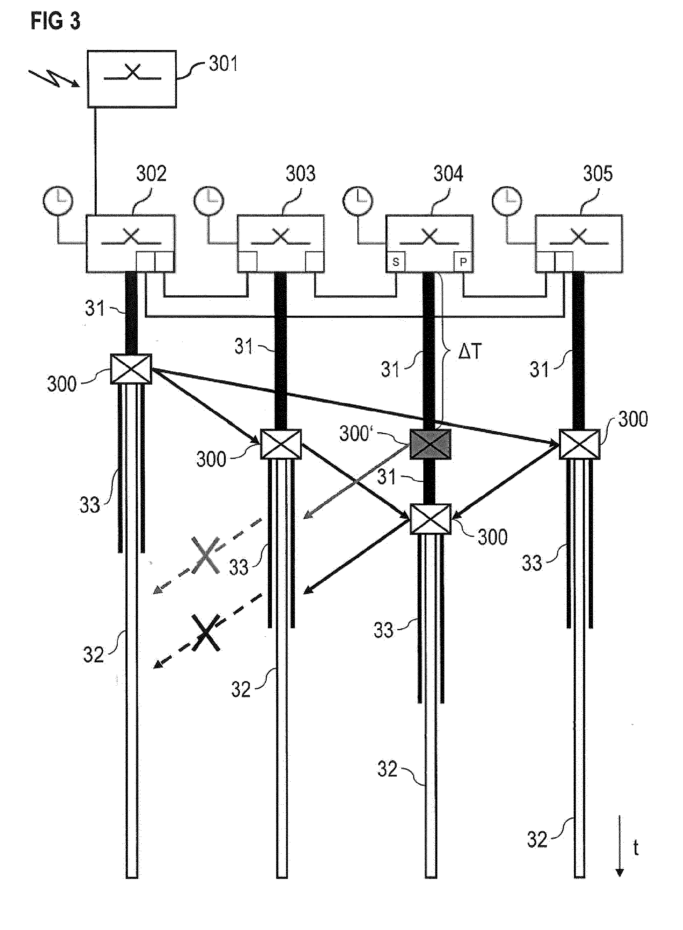

In Figur 3 ist Signalfluß bei einer gegenüber Figur 2 weiterentwickelten Lösung dargestellt. Analog zur in Figur 2 dargestellten Anordnung ist ein erster Switch 301 an einem Wurzel-Netzknoten mit einem zweiten Switch 302 verbunden, der innerhalb einer Ringtopologie mit einem dritten 303, vierten 304 und fünften Switch 305 verbunden ist. Der zweite Switch 302 ist direkt mit dem dritten 303 und dem fünften Switch 305 verbunden, während der vierte Switch 304 direkt mit dem dritten 303 und fünften Switch 305 verbunden ist. Ferner weist der vierte Switch 304 einen ersten Anschluß mit einer aktiven Port-Rolle (S-Port), der empfangene Synchronisierungsinformationen auch an andere Switches weiterleitet, und einen zweiten Anschluß mit einer passiven Port-Rolle (P-Port) auf, der empfangene Synchronisierungsinformationen lediglich lokal speichert. Außerdem ist der vierte Switch 304 auch bei der in Figur 3 dargestellten Lösung derart konfiguriert, daß er in regelmäßigen Zeitintervallen ΔT lokal verfügbare Synchronisierungsinformationen zur Timer-basierten Überwachung eines Synchronisierungspfades an Switches benachbarter Netzknoten sendet.

Um ein Konkurrieren von aktuellen Ausfall-Meldungen 300 mit veralteten Synchronisierungsinformationen 300' zu vermeiden, werden vorzugsweise Schutz-Timer für die Switches verwendet. Damit sind die Switches 302-305 entsprechend Figur 3 nach Übermittlung oder Weiterleitung einer Ausfall-Meldung 300 an Switches an benachbarten Netzknoten während einer vorgegebenen Zeitdauer 33 jeweils gegen eine Verarbeitung weiterer Ausfall-Meldungen 300 bzw. Topologie- oder Synchronisierungsinformationen gesperrt. Für eine derartige Sperrung eines Switchs 302-305 gegen eine Verarbeitung weiterer Ausfall-Meldungen 300 ist jeweils ein dem Switch 302-305 zugeordneter Schutz-Timer vorgesehen.

In Analogie zum Signalfluß entsprechend Figur 2 wird eine Ausfall-Meldung 300 bei einem Ausfall des ersten Switchs 301 am Wurzel-Netzknoten zunächst vom überwachenden zweiten Switch 302 an den dritten Switch 303 und an den fünften Switch 305 gesendet. Der dritte Switch 303 und der fünfte Switch 305 leiten die empfangene Ausfall-Meldung 300 jeweils an den benachbarten vierten Switch 304 weiter und starten jeweils ihren Schutz-Timer wie zuvor bereits der zweite Switch 302. Noch vor Empfang der Ausfall-Meldung 300 vom dritten 303 und fünften Switch 305 sendet der vierte Switch 304 nach Ablauf des Zeitintervalls ΔT über seinen S-Port lokal verfügbare Synchronisierungsinformationen 300' an den benachbarten dritten Switch 303. Da der dritte Switch 303 bei Empfang der Synchronisierungsinformationen 300' durch seinen Schutz-Timer gegen eine Verarbeitung weiterer Ausfall-Meldungen 300 bzw. Synchronisierungsinformationen 300' gesperrt ist, werden die Synchronisierungsinformationen 300' durch den dritten Switch 303 ignoriert und nicht an den benachbarten zweiten Switch 302 weitergeleitet. Dies gilt auch für die Ausfall-Meldung 300, die durch den vierten Switch 304 an den dritten Switch 303 weitergeleitet und dort während eines Ablaufs des Schutz-Timers ignoriert wird. Insgesamt wird durch die Schutz-Timer in den Switches 302-305 eine konkurrierende Verbreitung sowohl der Ausfall-Meldung 300 als auch der veralteten Synchronisierungsinformationen 300' unterdrückt. Dies führt dazu, daß nach Empfang der Ausfall-Meldung 300 lokal im zweiten 302, dritten 303, vierten 304 und fünften Switch 305 gespeicherte veraltete Synchronisierungsinformationen 31 konsistent durch aktualisierte Synchronisierungsinformationen 32 ausgetauscht werden. Entsprechend einer vorteilhaften Weiterbildung sind die Switches 302-305 derart ausgestaltet und konfiguriert, daß direkt an einem Nachbar-Netzknoten erzeugte Ausfall-Meldungen 300 oder an einem benachbarten Wurzel-Netzknoten erzeugte Topologie- oder Synchronisierungsinformationen auch während des Ablaufs des jeweiligen Schutz-Timers verarbeitet werden.

Eine für einen Schutz-Timer zu wählende Sperrzeit ist abhängig von Signallaufzeiten zwischen benachbarten Netzknoten und von einer Verarbeitungszeit für eine Ausfall-Meldung bzw. für Topologie- oder Synchronisierungsinformationen. Die Sperrzeit sollte zumindest einer Signallaufzeit einer Ausfall-Meldung von einem ersten Netzknoten zu einem zweiten Netzknoten und wieder zurück zum ersten Netzknoten zuzüglich einer Verarbeitungszeit der Ausfall-Meldung im zweiten Netzknoten entsprechen.

## Patentansprüche

1. Verfahren zur Synchronisierung lokaler Uhren in einem Kommunikationsnetz eines industriellen Automatisierungssystems, bei dem
- die lokalen Uhren an jeweils einem Netzknoten für ein Netzinfrastrukturgerät verwendet werden,
- die lokalen Uhren entlang eines schleifenfreien Synchronisierungspfades mit einer Baumtopologie ausgehend von einem Netzinfrastrukturgerät an einem Wurzel-Netzknoten als Zeitgeber synchronisiert werden,
- Netzinfrastrukturgeräte zur Bildung des Synchronisierungspfades untereinander Nachrichten mit Topologieinformationen austauschen und anhand der ausgetauschten Topologieinformationen den Wurzel-Netzknoten als Anfang des Synchronisierungspfades ermitteln, wobei der Synchronisierungspfad anhand einer Ermittlung minimaler Pfadkosten zum Wurzel-Netzknoten aufgebaut wird,
- die Netzinfrastrukturgeräte jeweils Angaben über einen Wurzel-Netzknoten und Pfadkosten zum Wurzel-Netzknoten speichern und Nachrichten mit Topologieinformationen, welche diese Angaben umfassen, an Netzinfrastrukturgeräte an benachbarten Netzknoten übermitteln,
- das Netzinfrastrukturgerät am Wurzel-Netzknoten durch zumindest ein Netzinfrastrukturgerät an einem Nachbar-Netzknoten auf einen Ausfall überwacht wird,
- das Netzinfrastrukturgerät am Nachbar-Netzknoten bei Detektion eines Ausfalls des Netzinfrastrukturgeräts am Wurzel-Netzknoten eine Ausfall-Meldung mit einem Identifikator des ausgefallenen Netzinfrastrukturgeräts erzeugt und diese an Netzinfrastrukturgeräte an benachbarten Netzknoten übermittelt, wobei die Ausfall-Meldung von einer Nachricht mit Topologieinformationen umfaßt oder an diese angefügt ist,
- die Netzinfrastrukturgeräte eine Ausfall-Meldung jeweils an Netzinfrastrukturgeräte an benachbarten Netzknoten weiterleiten,
- die Netzinfrastrukturgeräte einen jeweils gespeicherten Identifikator löschen, der einem Netzinfrastrukturgerät an einem bisherigen Wurzel-Netzknoten zugeordnet ist, falls dieser Identifikator mit dem in der Ausfall-Meldung angegebenen Identifikator des ausgefallenen Netzinfrastrukturgeräts übereinstimmt.

2. Verfahren nach Anspruch 1,
bei dem die Netzinfrastrukturgeräte nach Übermittlung oder Weiterleitung einer Ausfall-Meldung an Netzinfrastrukturgeräte an benachbarten Netzknoten während einer vorgegebene Zeitdauer jeweils gegen eine Verarbeitung weiterer Ausfall-Meldungen und/oder Nachrichten mit Topologieinformationen gesperrt sind.

3. Verfahren nach Anspruch 2,
bei dem die Netzinfrastrukturgeräte nach Übermittlung oder Weiterleitung einer Ausfall-Meldung an Netzinfrastrukturgeräte an benachbarten Netzknoten während der vorgegebene Zeitdauer jeweils für eine Verarbeitung weiterer Ausfall-Meldungen und/oder Nachrichten mit Topologieinformationen aktiviert sind, die direkt an jeweiligen Nachbar-Netzknoten erzeugt sind.

4. Verfahren nach einem der Ansprüche 2 oder 3,
bei dem eine Sperrung eines Netzinfrastrukturgeräts gegen eine Verarbeitung weiterer Ausfall-Meldungen und/oder Nachrichten mit Topologieinformationen mittels eines dem Netzinfrastrukturgerät zugeordneten Schutz-Timers erfolgt.

5. Verfahren nach einem der Ansprüche 2 bis 4,
bei dem die Netzinfrastrukturgeräte nach Übermittlung oder Weiterleitung einer Ausfall-Meldung an Netzinfrastrukturgeräte an benachbarten Netzknoten während der vorgegebenen Zeitdauer jeweils um Ausfall-Meldungen bereinigte Nachrichten mit Topologieinformationen an Netzinfrastrukturgeräte an benachbarten Netzknoten übermitteln oder weiterleiten.

6. Verfahren nach einem der Ansprüche 1 bis 5,
bei dem die Netzinfrastrukturgeräte Angaben über einen Wurzel-Netzknoten und Pfadkosten zum Wurzel-Netzknoten in empfangene Nachrichten mit Topologieinformationen jeweils mit entsprechenden lokal gespeicherten Angaben vergleichen und diejenigen Angaben übernehmen oder beibehalten, denen geringere Pfadkosten zugeordnet sind.

7. Verfahren nach einem der Ansprüche 1 bis 6,
bei dem die in den Netzinfrastrukturgeräten jeweils gespeicherten Angaben über einen Wurzel-Netzknoten einen Identifikator eines Netzinfrastrukturgeräts am Wurzel-Netzknoten umfassen.

8. Verfahren nach einem der Ansprüche 1 bis 7,
bei dem als Wurzel-Netzknoten derjenige Netzknoten ermittelt wird, dem das Netzinfrastrukturgerät mit einer höchsten Priorität und/oder einem niedrigsten Identifikatorwert zugeordnet ist.

9. Verfahren nach einem der Ansprüche 1 bis 8,
bei dem die Topologieinformationen Angaben zu bestehenden Verbindungen zwischen Netzknoten umfassen.

10. Verfahren nach einem der Ansprüche 1 bis 9,
bei dem die Netzinfrastrukturgeräte Router, Switches, Bridges und/oder Hubs sind.

11. Verfahren nach einem der Ansprüche 1 bis 10,
bei dem die Netzinfrastrukturgeräte eine Ausfall-Meldung jeweils an Netzinfrastrukturgeräte an benachbarten Netzknoten nur dann weiterleiten, wenn der in der Ausfall-Meldung angegebene Identifikator des ausgefallenen Netzinfrastrukturgerätes mit einem jeweils gespeicherten Identifikator eines Netzinfrastrukturgeräts am bisherigen Wurzel-Netzknoten übereinstimmt.

12. Verfahren nach einem der Ansprüche 1 bis 11,
bei dem die Netzinfrastrukturgeräte eine Nachricht mit Topologieinformationen ohne die Ausfall-Meldung jeweils an Netzinfrastrukturgeräte an benachbarten Netzknoten weiterleiten, wenn der in der Ausfall-Meldung angegebene Identifikator des ausgefallenen Netzinfrastrukturgerätes mit einem jeweils gespeicherten Identifikator eines Netzinfrastrukturgeräts am bisherigen Wurzel-Netzknoten übereinstimmt.

13. Netzinfrastrukturgerät zur Durchführung eines Verfahrens nach einem der Ansprüche 1 bis 12
- mit mehreren Anschlüssen für eine Verbindung mit innerhalb eines industriellen Kommunikationsnetzes miteinander verbundenen Netzinfrastruktur- oder Kommunikationsgeräten,
- mit einem die Anschlüsse miteinander verbindenden Koppelelement,
- mit einer lokalen Uhr,
- wobei das Netzinfrastrukturgerät für einen Austausch von Nachrichten mit Topologieinformationen und für eine Ermittlung eines Wurzel-Netzknotens als Anfang eines Synchronisierungspfades anhand ausgetauschter Topologieinformationen eingerichtet ist, wobei der Synchronisierungspfad durch minimale Pfadkosten zum Wurzel-Netzknoten gekennzeichnet ist,
- wobei das Netzinfrastrukturgerät für eine Speicherung von Angaben über einen Wurzel-Netzknoten und Pfadkosten zum Wurzel-Netzknoten und für eine Übermittlung von Nachrichten mit Topologieinformationen, welche diese Angaben umfassen, an Netzinfrastrukturgeräte an benachbarten Netzknoten eingerichtet ist,
- wobei das Netzinfrastrukturgerät für eine Ausfall-Überwachung eines Netzinfrastrukturgeräts an einem benachbarten Wurzel-Netzknoten eingerichtet ist,
- wobei das Netzinfrastrukturgerät für eine Erzeugung einer Ausfall-Meldung mit einem Identifikator eines ausgefallenen Netzinfrastrukturgeräts an einem benachbarten Wurzel-Netzknoten und für eine Übermittlung dieser Ausfall-Meldung an Netzinfrastrukturgeräte an benachbarten Netzknoten eingerichtet ist, wobei die Ausfall-Meldung von einer Nachricht mit Topologieinformationen umfaßt oder an diese angefügt ist,
- wobei das Netzinfrastrukturgerät für eine Weiterleitung einer Ausfall-Meldung an Netzinfrastrukturgeräte an benachbarten Netzknoten eingerichtet ist,
- wobei das Netzinfrastrukturgerät für eine Löschung eines gespeicherten Identifikators eines Netzinfrastrukturgeräts an einem bisherigen Wurzel-Netzknotens eingerichtet ist, falls dieser mit einem in einer Ausfall-Meldung angegebenen Identifikator eines ausgefallenen Netzinfrastrukturgeräts übereinstimmt.

14. Netzinfrastrukturgerät nach Anspruch 13,
bei dem das Netzinfrastrukturgerät nach Übermittlung oder Weiterleitung einer Ausfall-Meldung an Netzinfrastrukturgeräte an benachbarten Netzknoten während einer vorgegebene Zeitdauer jeweils gegen eine Verarbeitung weiterer Ausfall-Meldungen gesperrt ist.

15. Netzinfrastrukturgerät nach Anspruch 14,
bei dem für eine Sperrung des Netzinfrastrukturgeräts gegen eine Verarbeitung weiterer Ausfall-Meldungen ein dem Netzinfrastrukturgerät zugeordneter Schutz-Timer vorgesehen ist.

16. Netzinfrastrukturgerät nach einem der Ansprüche 14 oder 15,
bei dem das Netzinfrastrukturgerät eingerichtet ist, nach Übermittlung oder Weiterleitung einer Ausfall-Meldung an Netzinfrastrukturgeräte an benachbarten Netzknoten während der vorgegebenen Zeitdauer jeweils um Ausfall-Meldungen bereinigte Nachrichten mit Topologieinformationen an Netzinfrastrukturgeräte an benachbarten Netzknoten zu übermitteln oder weiterzuleiten.

17. Netzinfrastrukturgerät nach einem der Ansprüche 13 bis 16,
bei dem das Netzinfrastrukturgerät eingerichtet ist, Angaben über einen Wurzel-Netzknoten und Pfadkosten zum Wurzel-Netzknoten in empfangene Nachrichten mit Topologieinformationen jeweils mit entsprechenden lokal gespeicherten Angaben zu vergleichen und diejenigen Angaben zu übernehmen oder beizubehalten, denen geringere Pfadkosten zugeordnet sind.

18. Netzinfrastrukturgerät nach einem der Ansprüche 13 bis 17,
bei dem die gespeicherten Angaben über einen Wurzel-Netzknoten einen Identifikator eines Netzinfrastrukturgeräts am Wurzel-Netzknoten umfassen.

19. Netzinfrastrukturgerät nach einem der Ansprüche 13 bis 18,
bei dem das Netzinfrastrukturgerät ein Router, ein Switch, eine Bridge oder ein Hub ist.
